# EUROPEAN PATENT APPLICATION

(11) **EP 1 942 126 A1**
(43) Date of publication of application: **09.07.2008**
(21) Application number: 07025168.1
(22) Date of filing: 28.12.2007
(51) Int. Cl.: C08G 65/00

(54) **High productivity alkoxylation processes**

(30) Priority: 08.01.2007 US 879212 P; 16.08.2007 US 893452
(71) Applicant: Bayer MaterialScience LLC, Pittsburgh, PA 15205 (US)
(72) Inventor: McDaniel, Kenneth, G., Charleston Wv 25311 (US)
(74) Representative: Perchenek, Nils

(57) **Abstract**

The present invention provides a continuous process for the preparation of a polyoxyalkylene polyether product of number average molecular weight N employing continuous addition of starter, involving a) establishing in a continuous reactor a first portion of a catalyst/initial starter mixture effective initiate polyoxyalkylation of the initial starter after introduction of alkylene oxide into the continuous reactor, b) continuously introducing into the continuous reactor one or more alkylene oxides, c) continuously introducing into the continuous reactor one or more continuously added starters which may be the same or different than said initial starter, d) continuously introducing into the reactor fresh catalyst and/or further catalyst/further starter mixture such that the catalytic activity is maintained, wherein the catalyst is selected from the group consisting of modified oxides and hydroxides of calcium, strontium and barium, lanthanum phosphates or lanthanide series (rare earth) phosphates and hydrotalcites and synthetic hydrotalcites, e) polyoxyalkylating combined starters by continuously practicing at least steps b) through d) herein until a polyoxyalkylene polyether product of number average molecular weight N is obtained and f) continuously removing the polyoxyalkylene polyether product from the continuous reactor. Modified-calcium hydroxide or modified calcium oxide and lanthanum phosphate catalysts exhibit catch-up kinetics and are thus useful for the production of polyalkylene oxides using the continuous and CAOS processes.

## Description

### HIGH PRODUCTIVITY ALKOXYLATION PROCESSES

This application claims the benefit of U.S. Provisional Application No. 60/879,212, filed January 8, 2007.

### FIELD OF THE INVENTION

The present invention relates in general to polymerization, and more specifically, to improved processes for the production of polyoxyalkylene polyethers.

### BACKGROUND OF THE INVENTION

Historically, basic catalysts such as potassium hydroxide have been used to manufacture polyethers in semi-batch processes in which a starter and catalyst are charged to a reactor and an alkylene oxide or a mixture of oxides are added in such a manner as to control both the heat release and polymer composition. These processes have been used for over 50 years and have the advantage of producing products having narrow molecular weight distributions. The application technologies for the polyols and ethoxylates industries have developed around these narrow polydispersity products such that it may be difficult to introduce more efficient processes unless those processes can provide similar molecular weight distributions. A continuous base catalyzed process would be one way to increase productivity; however, broader polydispersity products would be obtained because base catalysis follows conventional kinetics. Other kinetic properties such as the pKa of the hydroxyl group also have small influences on the polydispersity (molecular weight distribution).

One of the basic rules of polymer chemistry as defined by Flory (Principles of Polymer Chemistry, Flory, PJ., Cornell University Press, 1953) is that the terminal groups of polymers grow at rates that are independent of the molecular weight of the polymers. This relationship is a central tenet governing the formation of polymers ranging from polyurethanes to polyesters to polyolefins.

The only known exception to this polymerization rule was discovered and disclosed by Pazos in U.S. Pat. Nos. 5,689,012 and 5,777,177 for the polymerization of alkylene oxides using double metal cyanide catalysts ("DMC"). In those patents, Pazos reported that DMC catalysts exhibit a remarkable property of having a preferred selectivity for reactions with low molecular weight species in a mixture having different molecular weights. This unusual and unique property of DMC catalysts has also been acknowledged in U.S. Pat. No. 7,012,164 (col. 3, lines 58-67) by Yamada, et al. in the development of other continuous processes.

A key factor in the development by Pazos of continuous processes for the production of polyethers is that DMC catalysts exhibit a property known to those skilled in the art as "catch-up" kinetics. Catch-up kinetics describes a unique type of preferential catalysis in which the alkylene oxide addition is more selective than in a statistical addition. For example, with a mixture of lower and higher molecular weight hydroxylic compounds, the lower molecular weight species react with alkylene oxide at faster rates than the higher molecular weight species react with alkylene oxide. In such continuous processes, the reactants (i.e., starter, alkylene oxide and catalyst) are continually charged to a stirred-tank reactor at the same time product is removed from the reactor. The notable feature of the Pazos process is that relatively narrow molecular weight distributions are obtained instead of the broad distributions that would be expected for a comparable potassium hydroxide catalyzed process.

Many continuous polymerization processes use a pipe-type reactor to obtain a narrow distribution product and the catalysts used in the processes can follow conventional kinetics. However, such tubular reactors are not used for the production of polyethers as the relatively slow kinetic rate for base catalysis would necessitate very large reactors in addition to the complexities encountered with heat removal; with multiple alkylene oxide injection points; and with mixing assemblies to disperse the oxide in polyether and aid in heat removal.

The continuous processes of Pazos use a conventional reactor normally employed for semi-batch processes and the product fractions exiting this completely mixed reactor have been in the reactor for different amounts of time and thus exposed to an alkylene oxide and chain growth for differing amounts of time. With conventional kinetics, a broad molecular weight distribution would be obtained instead of the narrow distribution product seen with the Pazos' processes. The ability to obtain a narrow distribution product appears to be directly related to the DMC catalyst exhibiting catch-up kinetics.

The term continuous addition of starter ("CAOS") has been used by those skilled in the art to describe a modified semi-batch process in which the starter is added simultaneously with some of the alkylene oxide. With conventional kinetics, this type of process would also be expected to give a product with a broad molecular weight distribution. However, with catch-up kinetics which show a preference for the lower molecular weight materials, Pazos demonstrates that the products have narrower molecular weight distributions than expected. DMC catalysts are the only catalysts known to exhibit this type of kinetics.

There remains a need for improved processes for producing polyoxyalkylene polyethers.

### SUMMARY OF THE INVENTION

Accordingly, the present invention provides a modified semi-batch process known as a CAOS process and a continuous process for the preparation of a polyoxyalkylene polyether product of number average molecular weight N employing continuous addition of starter, involving a) establishing in a continuous reactor a first portion of a catalyst/initial starter mixture effective initiate polyoxyalkylation of the initial starter after introduction of alkylene oxide into the continuous reactor, b) continuously introducing into the continuous reactor one or more alkylene oxides, c) continuously introducing into the continuous reactor one or more continuously added starters which may be the same or different than said initial starter, d) continuously introducing into the reactor fresh catalyst and/or further catalyst/further starter mixture such that the catalytic activity is maintained, wherein the catalyst is selected from the group consisting of modified oxides and hydroxides of calcium, strontium and barium, lanthanum phosphates or lanthanide series (rare earth) phosphates and hydrotalcites and synthetic hydrotalcites, e) polyoxyalkylating combined starters by continuously practicing at least steps b) through d) herein until a polyoxyalkylene polyether product of number average molecular weight N is obtained and f) continuously removing the polyoxyalkylene polyether product from the continuous reactor. The inventive continuous and CAOS processes utilize modified-calcium hydroxide or modified calcium oxide and lanthanum phosphate catalysts which surprisingly exhibit catch-up kinetics and are useful for the production of polyalkylene oxides having narrow product distributions. The polyalkylene oxides produced by the inventive process are particularly suitable for use as surfactants.

These and other advantages and benefits of the present invention will be apparent from the Detailed Description of the Invention herein below.

### BRIEF DESCRIPTION OF THE FIGURES

The present invention will now be described for purposes of illustration and not limitation in conjunction with the figures, wherein:

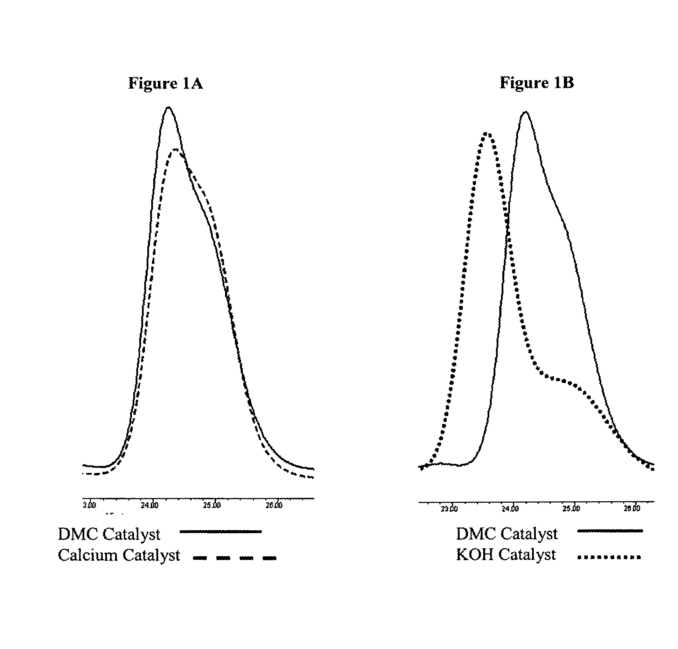

Figures 1A and 1B provide product gel permeation chromatograms ("GPC's") of modified calcium hydroxide catalysts in a catch-up kinetics test in which a mixture of a 9.5 mole ethoxylate of nonylphenol and a C₁₃ alcohol were ethoxylated with sufficient ethylene oxide to give a 6.5 mole ethoxylate of the C₁₃ alcohol if the ethylene oxide reacted only with the alcohol;

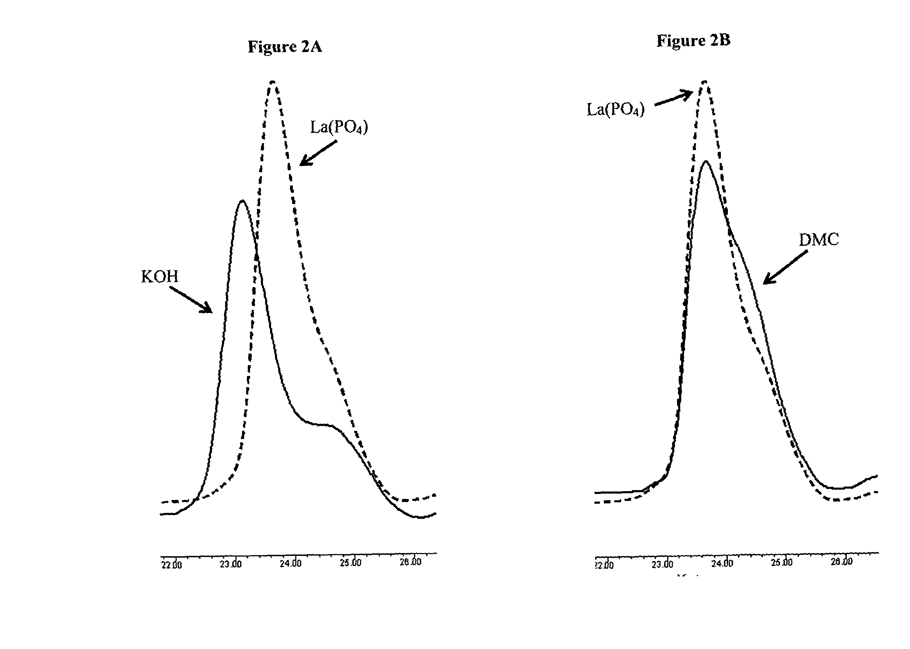

Figures 2A and 2B are product GPC's for lanthanum phosphate in a catch-up kinetics test in which a mixture of a 9.5 mole ethoxylate of nonylphenol and a C₁₃ alcohol were ethoxylated with sufficient ethylene oxide to give a 6.5 mole ethoxylate of the C₁₃ alcohol if the ethylene oxide reacted only with the alcohol;

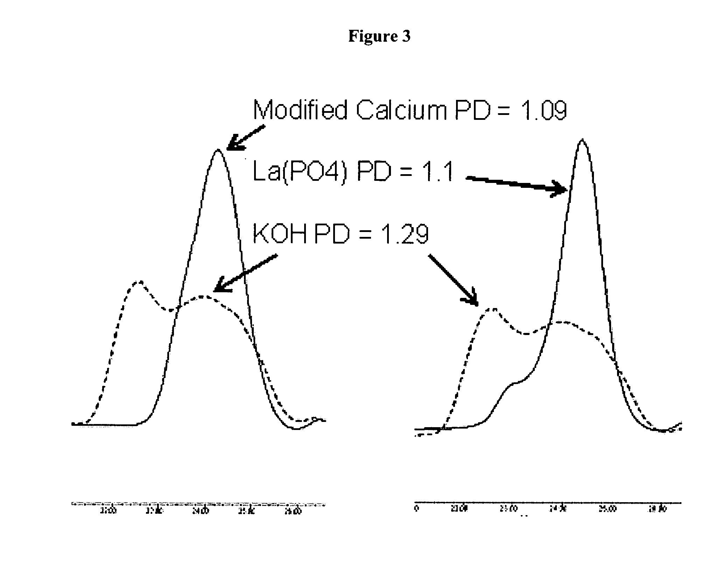

Figure 3 illustrate CAOS processes with a modified calcium catalyst, La(PO₄) and potassium hydroxide starting with a heel of a 6.5 mole ethoxylate of a C₁₃ alcohol and feeding C₁₃ alcohol and ethylene oxide simultaneously and then ethylene oxide only equivalent to 28% of the total weight reactants;

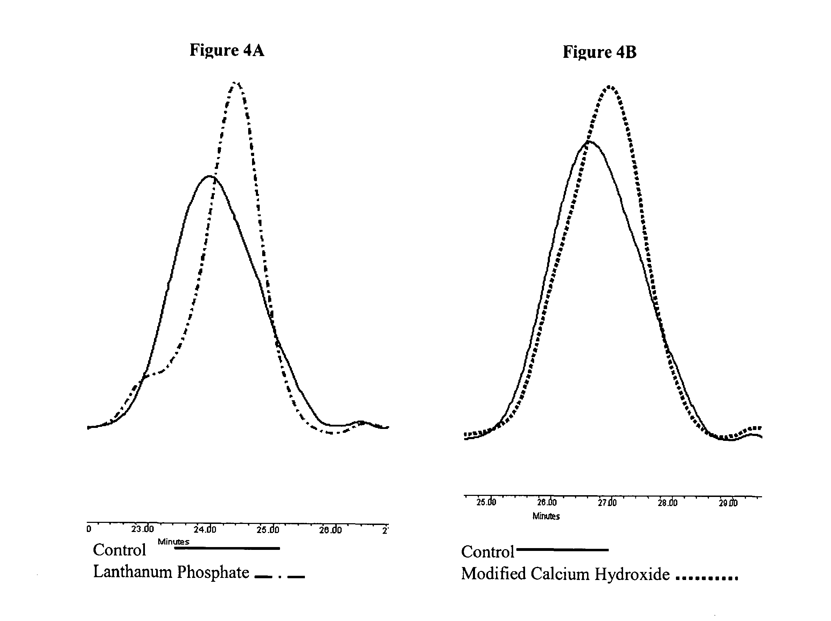

Figures 4A and 4B provide a comparison of products from CAOS processes using the GPC's of products from either lanthanum phosphate catalysis or modified calcium hydroxide catalysis to produce 6.5 mole ethoxylate of a C₁₃ alcohol overlaid with the GPC of a commercial 6.5 mole ethoxylate of a C₁₃ alcohol; and

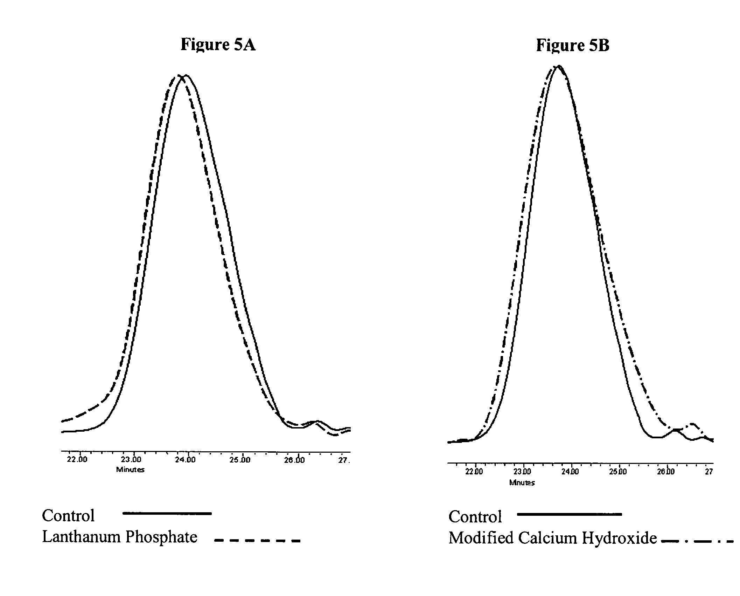

Figures 5A and 5B illustrate a continuous product GPC versus commercial product GPC a of 6.5 mole ethoxylate of a C₁₃ alcohol.

### DETAILED DESCRIPTION OF THE INVENTION

The present invention will now be described for purposes of illustration and not limitation. Except in the operating examples, or where otherwise indicated, all numbers expressing quantities, percentages, OH numbers, functionalities and so forth in the specification are to be understood as being modified in all instances by the term "about." Equivalent weights and molecular weights given herein in Daltons (Da) are number average equivalent weights and number average molecular weights respectively, unless indicated otherwise.

The present invention provides a continuous process for the preparation of a polyoxyalkylene polyether product of number average molecular weight N, involving a) establishing in a continuous reactor a first portion of a catalyst/initial starter mixture effective to initiate polyoxyalkylation of the initial starter after introduction of alkylene oxide into the continuous reactor, b) continuously introducing into the continuous reactor one or more alkylene oxides, c) continuously introducing into the continuous reactor one or more continuously added starters which may be the same or different than the initial starter, d) continuously introducing into the reactor fresh catalyst and/or further catalyst/further starter mixture such that the catalytic activity is maintained, wherein the catalyst is selected from the group consisting of modified oxides and hydroxides of calcium, strontium and barium, lanthanum phosphates or lanthanide series (rare earth) phosphates and hydrotalcites and synthetic hydrotalcites, e) polyoxyalkylating combined starters by continuously practicing at least steps b) through d) herein until a polyoxyalkylene polyether product of number average molecular weight N is obtained and f) continuously removing the polyoxyalkylene polyether product from the continuous reactor.

The present invention further provides a modified semi-batch process for producing a polyether comprising polymerizing an epoxide in the presence of a catalyst selected from the group consisting of modified oxides and hydroxides of calcium, strontium and barium, lanthanum phosphates or lanthanide series (rare earth) phosphates and hydrotalcites and synthetic hydrotalcites, a continuously added starter (S_{c}) and optionally, an initially charged starter (Sᵢ), wherein the S_{c} comprises at least 2 eq. % of the total starter used; and wherein the epoxide and the S_{c} are continuously added to the reactor during the polymerization. In addition, for a portion of the process an alkylene oxide feed without the addition of starter may be used to control product polydispersity.

The present invention further provides an improved process for the production of surfactants, the improvement involving including one or more polyoxyalkylene polyether product of number average molecular weight N produced by a continuous process involving a) establishing in a continuous reactor a first portion of a catalyst/initial starter mixture effective to initiate polyoxyalkylation of the initial starter after introduction of alkylene oxide into the continuous reactor, b) continuously introducing into the continuous reactor one or more alkylene oxides, c) continuously introducing into the continuous reactor one or more continuously added starters which may be the same or different than the initial starter, d) continuously introducing into the reactor fresh catalyst and/or further catalyst/further starter mixture such that the catalytic activity is maintained, wherein the catalyst is selected from the group consisting of modified oxides and hydroxides of calcium, strontium and barium, lanthanum phosphates or lanthanide series (rare earth) phosphates and hydrotalcites and synthetic hydrotalcites, e) polyoxyalkylating combined starters by continuously practicing at least steps b) through d) herein until a polyoxyalkylene polyether product of number average molecular weight N is obtained and f) continuously removing the polyoxyalkylene polyether product from the continuous reactor.

The present invention also provides an improved process for the production of surfactants, the improvement involving including a polyethers produced by a modified semi-batch process involving polymerizing an epoxide in the presence of a catalyst selected from the group consisting of modified oxides and hydroxides of calcium, strontium and barium, lanthanum phosphates or lanthanide series (rare earth) phosphates and hydrotalcites and synthetic hydrotalcites, a continuously added starter (S_{c}), and optionally, an initially charged starter (Sᵢ), wherein the S_{c} comprises at least 2 eq. % of the total starter used, and wherein the epoxide and the S_{c} are continuously added to the reactor during the polymerization. In addition, for a portion of the process an alkylene oxide feed without the addition of starter may be used to control product polydispersity.

The present inventor has surprisingly discovered that modified calcium hydroxide or modified calcium oxide and lanthanum phosphate catalysts exhibit the characteristic "catch-up" kinetics first observed by Pazos with double metal cyanide ("DMC") catalysts. For example, with catch-up kinetics, if one alkoxylates a mixture of an aliphatic alcohol and an ethoxylated alcohol containing nine moles of ethylene oxide ("EO") in a semi-batch process, as additional ethylene oxide is added, a larger amount of the ethylene oxide is selectively added to the original aliphatic alcohol (lower molecular weight) until the products have about the same molecular weight. The net effect is that the product has a more narrow distribution instead of a broader distribution that would be expected based on conventional catalysts such as potassium hydroxide, sodium hydroxide and cesium hydroxide.

Thus, the modified calcium hydroxide or modified calcium oxide and lanthanum phosphate catalysts are useful for the production of polyalkylene oxides using the continuous and CAOS processes. The modified-calcium catalysts and the lanthanum catalysts are known to give "peaked distribution" ethoxylates in a conventional semi-batch process and these peaked distributions are reported to offer improved performance advantages in some applications. The present inventor has further extended this concept to include any alkoxylation catalyst, such as the hydrotalcites, that gives peaked distributions to be suitable for use in the CAOS and continuous processes.

The starter used to prepare the catalyst/starter mixture is preferably an oligomeric starter, most preferably an oxyalkylated oligomer, based on the same low molecular weight starter whose continuous addition is to be used in the continuous process. For example, where propylene glycol is to be continuously added to the reactor, a suitable oligomeric starter useful in preparing the activated catalyst/starter mixture would be a 300 Da to 1,000 Da molecular weight polyoxypropylene glycol. The same oligomeric starter would be suitable for use where dipropylene glycol or water will be the continuously added starters. Where glycerine is to be continuously added starter, an oxypropylated glycerine polyol having a molecular weight of 400 Da to 1,500 Da is advantageously used. However, a feature of the present process is the ability to utilize essentially monomeric starters such as ethylene glycol, propylene glycol, and the like. Thus, the starter used to prepare the catalyst/starter mixture may be the same as the continuously added starter.

Moreover, the word "starter" as employed in the term "catalyst/initial starter" means an oxyalkylatable molecule of any molecular weight. This oxyalkylatable molecule may be a low molecular weight starter molecule having a molecular weight below about 300 Da, such as methanol, ethanol, propanol, butanol, 2-ethyl-1-hexanol, 2-propyl-1-heptanol, dodecanol, tridecanol, t-butylphenol, nonylphenol, dodecylphenol, propylene glycol, dipropylene glycol, glycerine, a three mole oxypropylate of glycerine, etc., or may be a much higher molecular weight molecule, for example the product of desired product molecular weight.

The continuously added starter may be essentially any polyoxyalkylene polymer or copolymer or suitable initiator for the production thereof, which has a molecular weight less than the desired product weight. Thus, the molecular weight of the continuously added starter may vary between 18 Da (water) and 45,000 Da (high molecular weight polyoxyalkylene polyol). It is much preferred to use continuously added starters with molecular weight less than 1,000 Da, preferably less than 500 Da, and most preferably less than 300 Da.

The continuously added starter may be water, ethylene glycol, diethylene glycol, triethylene glycol, propylene glycol, dipropylene glycol, tripropylene glycol, 1,2-, 1,3-, and 1,4-butylene glycols, neopentyl glycol, glycerine, trimethylolpropane, triethylolpropane, pentaerythritol, α-methylglucoside, hydroxy-methyl-, hydroxyethyl-, and hydroxypropylglucosides, sorbitol, mannitol, sucrose, tetrakis [2-hydroxyethyland 2-hydroxypropyl]ethylene diamines, and other commonly used starters. Also suitable are monofunctional starters such as methanol, ethanol, 1-propanol, 2-propanol, n-butanol, 2-butanol, 2-ethyl-1-hexanol, and the like, as well as phenol, catechol, 4,4'-dihydroxybiphenyl, 4,4'-dihydroxydiphenylmethane, nonylphenol etc. Other suitable starters include those described in U.S. Pat. Nos. 3,900,518; 3,941,849; and 4,472,860, herein incorporated by reference.

Alkylene oxides useful in the present process include, but are not limited to, ethylene oxide, propylene oxide, 1,2- and 2,3-butylene oxide, isobutylene oxide, epichlorohydrin, cyclohexene oxide, styrene oxide, and the higher alkylene oxides such as the C₅₋₃₀ α-alkylene oxides. Ethylene oxide, propylene oxide or mixtures thereof or with another alkylene oxide are preferred. Other polymerizable monomers may be used as well, e.g. anhydrides and other monomers as disclosed in U.S. Pat. Nos. 3,404,109, 5,145,883 and 3,538,043, which are herein incorporated by reference.

To determine whether a particular catalyst exhibits catch-up kinetics, the present inventor has devised two simple tests in which a mixture of higher and lower molecular weight hydroxylic compounds is ethoxylated.

In the first test, the starting materials are a 9.5 mole ethoxylate of nonylphenol (MW 638) and commercial aliphatic alcohol with a C₁₃ backbone (MW 200). With conventional kinetics, the addition of the oxide to these materials would be about statistical with a small modification to the relative amount of addition by other structural influences. Because potassium hydroxide is known to catalyze reactions by conventional catalysis (herein termed "Flory type" kinetics), it was used a baseline to determine whether the calcium and lanthanum catalysts posses different properties.

In the second test, a C₁₃ alcohol ethoxylate having 6.5 moles of ethylene oxide is produced and a new portion of the C₁₃ alcohol was added along with the sequential addition of enough ethylene oxide to give 6.5 moles of ethylene oxide per hydroxyl of the new C₁₃ alcohol.

Lanthanum phosphate catalysts for use in the present invention are preferably produced following procedures similar to those given in WO 2004/018096, U.S. Published Patent Application No. 2003/0009059 and U.S. Pat. No. 5,210,325. Other patents teaching the preparation of lanthanum phosphate or lanthanide based catalysts include U.S. Pat. Nos. 6,514,898; 5,118,570; 5,210,325; 6,765,116; and 5,210,325 and the reference contained therein.

There is extensive patent art describing various modified calcium oxide and hydroxide catalysts suitable for use in the inventive processes and one of the earliest patents is U.S. Pat. No. 4,453,022, issued to McCain et al. Other patents and patent applications disclosing methods for the preparation of these catalysts include U.S. Published Patent Application No. 2007/0060770, U.S. Pat. Nos. 4,775,653; 6,365,541; 5,191,104; 5,600,020; 6,365,541; and 4,886,917 and the references included therein. For a discussion of a preferred modified calcium catalyst, see U.S. Published Patent Application No. 2007/0060770.

A wide range of hydrotalcites and synthetic hydrotalcites have been disclosed for the semi-batch production of ethoxylates which may be utilized in the process of the present invention including U.S. Pat. Nos. 6,646,145; 5,374,750; 5,292,910; 5,012,012; 6,504,061; 6,646,145; and 5,539,135 and the references included therein.

The molecular weight distributions of the products produced using a modified calcium hydroxide catalyst, a DMC catalyst and potassium hydroxide are shown by the GPC chromatograms in Figures 1 A and 1 B. The curves show DMC catalysis versus calcium (unique kinetics versus unknown kinetics of calcium and the DMC GPC curves versus conventional kinetics of potassium hydroxide). Figure 1A provides an overlay of the product GPC curves using DMC and a modified calcium catalyst. Figure 1B provides an overlay of product GPC curves using DMC and KOH catalysis. The narrower distribution in comparison with potassium hydroxide indicates that the calcium catalyst exhibits catch-up kinetics.

Figures 2A and 2B illustrate the GPC curves from the products for the ethoxylation of a mixture of the 9.5 mole ethoxylate of nonylphenol and C₁₃ alcohol using a lanthanum phosphate catalyst with controls produced with potassium hydroxide (Fig. 2A)and DMC (Fig. 2B) catalysis. The overlays of the curves with products produced using potassium hydroxide catalysis and with DMC catalysis show that lanthanum phosphate does not follow the conventional kinetics described by Flory. As can be appreciated by reference to Figures 2A and 2B, the product produced with potassium hydroxide shows two peaks; a finding which is consistent with a more statistical addition of ethylene oxide to the polymer without the influence of polymer molecular weight.

The diagram below illustrates a typical commercial semi-batch process for the production of ethoxylates with respect to times associated with the various steps.

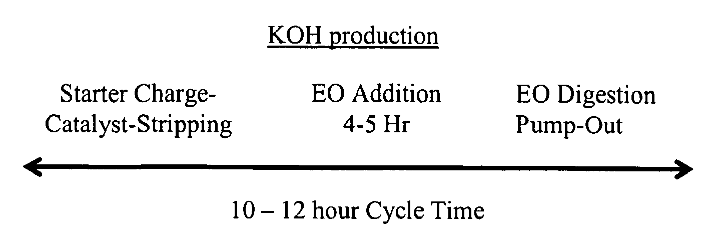

One of the longer steps for this conventional process is the charging of the starter and potassium hydroxide followed by stripping of the water. The stripping step to remove the water and to shift the equilibrium from potassium hydroxide to potassium alkoxide is critical to the production of product containing low levels of polyethylene oxides which would be generated from the reaction of ethylene oxide with residual water.

A potential process, labeled P2P (product to product) CAOS, for increased productivity is shown below.

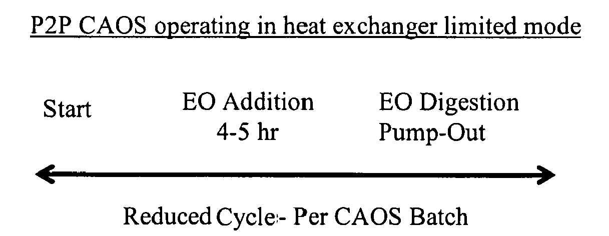

For a CAOS process, a small amount of product is preferably allowed to remain in the reactor and act as a "heel" for the next run. This heel contains active catalyst that is immediately active. The starting alcohol or phenol is charged simultaneously with ethylene oxide, thus significantly decreasing the first reactor step thereby decreasing cycle time and increasing productivity. In one mode of operation, a mixture of starter and ethylene oxide are charge simultaneously which can be followed by a second addition of ethylene oxide or alkylene oxide without the addition of starter. One feature of this mode of operation is that the product polydispersity and the amount of unreacted alcohol can be controlled by the amount of the ethylene oxide added in this second step. This type of process is possible only with catalysts exhibiting catch-up kinetics. If a conventional catalyst were used, the product would show a broad distribution, as the final product has been exposed to the alkoxylation process for variable amount of time.

The heel used to prepare the catalyst/starter mixture is preferably an ethoxylated aliphatic alcohol or an ethoxylated alkylphenol, based on the same low molecular weight starter whose continuous addition is to be used in the continuous process. For example, where C₁₃ alcohol is to be continuously added to the reactor, a suitable oligomeric heel useful in preparing the activated catalyst/starter mixture would be a 244 Da to 1,100 Da ethoxylated C₁₃ alcohol. However, a feature of the present process is the ability to utilize a wide range of monomeric starters such as methanol, ethanol, propanol, butanol, 2-ethyl-1-hexanol, 2-propyl-1-heptanol, dodecanol, tridecanol, t-butylphenol, nonylphenol, dodecylphenol and the like. Thus, the starter used to prepare the catalyst/heel mixture may be the same as the continuously added starter.

Both a modified-calcium hydroxide catalyst and a lanthanum catalyst were used in a CAOS process in which a C₁₃ alcohol ethoxylate having 6.5 moles of ethylene oxide was used a heel and subsequently a new C₁₃ alcohol and EO were charged simultaneously to the reactor to produce a final product having C₁₃ 6.5 ethylene oxide composition. The C₁₃ alcohol was charged at a rate such that its addition was completed prior to the addition of ethylene oxide. After the C₁₃ alcohol addition was complete, the amount of ethylene oxide that remained to be added to the reactor was 28 % based on the final weight of ethoxylate. Potassium hydroxide catalysis was used a control because it exhibits conventional kinetics and provided a good measure of the differences between the products.

Overlays of the GPC curves and the product polydispersities are shown in Figure 3. The potassium hydroxide-based product appears to give a mixture of two distributions which is consistent with about equivalent amounts of ethylene oxide being added per hydroxyl unit to the heel and to the new C₁₃ alcohol being added to the system. The distributions for the lanthanum phosphate product and for the modified calcium hydroxide product are much narrower and show only small amounts of a higher molecular weight ethoxylate.

These curves and data demonstrate that the kinetics for both lanthanum and calcium differ from conventional Flory kinetics that are typical for chain polymer growth. The polydispersities of the products from lanthanum phosphate and from the modified calcium hydroxide catalyst were respectively 1.1 and 1.09 which were narrower than the 1.13 polydispersity of the commercial control (TOMADOL 23-6.5). An overlay of these curves is provided in Figure 4A (lanthanum phosphate) and Figure 4B (modified calcium hydroxide).

The polyethers produced by the inventive processes may find use as surfactants and may be combined with additives, solvents and/or other surfactants as is known in the art to provide a wide variety of compositions such as laundry detergents, dishwashing detergents, metal grease removers, glass cleaners and floor cleaners.

### EXAMPLES

The present invention is further illustrated, but is not to be limited, by the following examples. All quantities given in "parts" and "percents" are understood to be by weight, unless otherwise indicated. In all examples herein using a DMC catalyst, the catalyst was made according to U.S. Pat. No. 5,482,908. NEODOL 25 is a mixture of C₁₂, C₁₃, C₁₄ and C₁₅ high purity primary alcohols which is commercially available from Shell. TOMADOL 23-3 is an ethoxylated linear C₁₂₋₁₃ alcohol with three moles (average) of ethylene oxide which is commercially available from Air Products.

A continuous one-stage reactor operated at 130° to 180°C with a two-hour retention time to prepare a 6.5 mole ethoxylate of a C₁₃ alcohol was used to determine whether a lanthanum phosphate catalyst and a modified calcium hydroxide catalyst could be used to prepare ethoxylates that are equivalent to the products from the semibatch KOH process. The products produced with lanthanum phosphate and modified calcium catalysts exhibited polydispersities of 1.12 and 1.18, respectively, which compares favorably with the 1.13 value of the commercial product (See Figures 5A and 5B for a comparison of these products with a commercial product). These data demonstrate that such catalysts are viable candidates for the use with a commercial process that would provide significant improvements in productivity. The conventional catalysts, potassium hydroxide and sodium hydroxide could not be used in this process because the polydispersities of those products would be much broader and would not match the polydispersity of the products produced by the inventive processes (An example of the continuous process is given below).

### Example 1

In this example, a calcium-based catalyst was prepared with no aluminum alkoxide used in the preparation. A 250 ml three-neck flask reaction vessel was flushed with nitrogen and calcium hydroxide (9.75 g) was added along with TOMADOL 23-3 (106.2 g). The mixture was stirred at room temperature and 2-ethylhexanoic acid (2.23 g) was added by rapid drop addition of about three minutes. The contents were heated to 30°C over a period of about one hour with stirring and with a vent open to atmosphere through the reflux condenser. The contents were maintained at 30°C for one additional hour. Concentrated sulfuric acid (2.46 g) was added to flask at a rate of about one drop every three seconds. The contents were heated for 15 minutes at 30°C and another 2.46 g of sulfuric acid was added at a rate of about one drop every three seconds. The reflux condenser was added to the three-neck flask and the contents heated to 110°C over 1.5 hours. The reaction vessel was slowly heated to 126°C over about 30 minutes and the temperature maintained for about four hours. The flask was heated to 138°C, and maintained for about 12-16 hours. The flask was heated to about 145°C for two hours. The contents were cooled to 110-120°C and the water was stripped for 30 minutes using vacuum and no condenser.

### Example 2

In this example, lanthanum phosphate catalyst was prepared as described on page 31 of WO 04/18096 in (example B Reverse addition (LAPO)) in a 500 ml glass reactor equipped with reflux condenser, nitrogen inlet, overhead stirrer, and temperature measurement. Lanthanum carbonate (15.6 g, 0.032 moles) was charged to the flask with 100 ml of nitrogen degassed distilled water (solution was a slurry). A phosphoric acid solution was prepared by mixing 8.25 g of 85% phosphoric acid (0.071 moles) in 100 ml of nitrogen degassed distilled water. The phosphoric acid was added to the carbonate solution over a 30-minute period at a temperature of 25°C. The solution was heated to 100°C for two and one-half hours. The product was cooled to room temperature and the solids filtered.

The solids were transferred to a glass vessel and 250 ml of nitrogen degassed distilled water were added at 50°C for 30 minutes with rapid stirring. The product was cooled to about 25°C and filtered. The solids were transferred to a reactor and treated with a solution of 5 ml of ammonium hydroxide (10 N) mixed in 250 ml of water. The contents were stirred rapidly for 30 minutes with a temperature of 50°C. The contents were cooled to 25°C and filtered. The filter cake was dried at 50°C with a full vacuum overnight. The dried cake was ground.

### Example 3

This example evaluated a modified calcium catalyst with a catch-up kinetics test. Nonylphenol 9.5 EO semibatch (200 g), NEODOL 25 (200 g) and the catalyst mixture DMC-catalyzed C₁₃ 3EO in catalyst prepared in Example 1 (14 g) were charged to a reactor and heated to 100°C. The mixture was stripped for 30 minutes at 100°C, heated to 150-160°C and a nitrogen blanket added to 30 psia. Ethylene oxide (286 g, 6.5 moles) was added over a two to four hour period. The total pressure (ethylene oxide and nitrogen) was kept to less than about 60 psia. The mixture was digested at 150-160°C until a constant baseline was achieved and digestion was continued for an additional 30 minutes. The mixture was cooled to 130°C, stripped for 20 minutes and cooled to discharge temperature.

### Example 4

In this example, the lanthanum phosphate continuous process was evaluated. A laboratory continuous reactor made from a stirred tank reactor equipped with a back-pressure regulator to control reactor pressure, a continuous feed system for ethylene oxide and a continuous feed for a mixed catalyst and starter alcohol stream was used. In addition, the system was equipped with a heating and cooling control and a process control unit.

The continuous reactor was filled with a C₁₃ alcohol 6.5 EO product from a modified semibatch process to a liquid-full level leaving minimal or no vapor space above the liquid. Lanthanum phosphate was charged to give about 1,800 ppm (based on final product) and the system was heated to 170°C and stripped. The back-pressure control was set for 45 psig and ethylene oxide was charged to give 7.4% ethylene oxide in the mixture and after evidence of initiation, the ethylene oxide and C₁₃ alcohol-catalyst mixture was charged respectively at rates of 8.34 g/min and 5.83 g/min. The reactor was operated for three retention times (about two hours/retention time) and a product sample was obtained. The polydispersity of the product was 1.12.

### Example 5

A modified calcium catalyst prepared as described above in Example 1 was evaluated at 170°C as in the above procedure using a two-hour retention time. After three retention times, a sample of the product had a polydispersity of 1.18.

### Example 6

A 2,000 ml beaker with heating capability for 40°C and equipped with a pH meter and an addition funnel or pump to feed about 225 ml of solution over a period of about one hour was used in this example. Solution A was prepared from magnesium nitrate hexahydrate (34.01 g), aluminum nitrate nonahydrate, (23.84 g) and manganese acetate tetrahydrate (10.41 g) in 225 ml of water. Solution B was prepared by adding sodium carbonate (6.74 g) to 277 ml of water. Deionized water (900 g) was added to the reaction vessel and the pH adjusted to about 9 using sodium hydroxide (2N) while maintaining the temperature at 40°C. Solution A was added over a one hour period at a rate of about 4.9 g/min and solution B at a rate of about 4.9 g/min to reaction vessel while the pH was maintained at 9 using 2N sodium hydroxide.

The mixture was digested for one hour and the solids were filtered and then washed with about three liters of water. The solids were calcined at 800°C for three hours with a nitrogen atmosphere over the catalyst. The finished catalyst was stored in a dry, carbon dioxide-free atmosphere.

### Example 7 (prophetic)

The laboratory continuous reactor is a stirred tank reactor equipped with a back-pressure regulator to control reactor pressure, a continuous feed system for ethylene oxide and a continuous feed system for a mixed catalyst and starter alcohol stream. In addition, the system is equipped with a heating and cooling control and with a process control unit.

The continuous reactor is filled with a C₁₃ alcohol 6.5 EO product from a modified semibatch run to a liquid-full level leaving minimal or no vapor space above the liquid. Synthetic hydrotalcite is charged to give about 3000 ppm in the final product and the system is heated to 170°C and stripped. The back-pressure control is set for 45 psig and ethylene oxide is charged to give 7.4% ethylene oxide in the mixture and after evidence of a reaction, the EO and C₁₃ alcohol-catalyst mixture is charged respectively at rates of 8.34 g/min and 5.83 g/min with a product catalyst concentration of 3,000 ppm. The reactor is operated for three retention times (about two hours/retention time) and a product sample is obtained. The polydispersity of the product is similar to that of a control based on a semibatch KOH process.

### Example 8

This example describes a generalized CAOS process in which a portion of product (a "heel" e.g. 6.5 mole ethoxylate of a C₁₃ alcohol) was charged to a reactor, (alternatively, some product in the reactor from previous preparation may be left in the reactor) and catalyst was charged to the reactor. Optionally, starter may be charged to the reactor in an amount ranging from 0.2 wt.% to an amount equal or greater than the amount of heel of C₁₃ alcohol starter. The reactor was heated to a reaction temperature of 160°C, a nitrogen atmosphere was added to maintain a non-explosive environment and ethylene oxide was charged to the reactor. For a portion of the process, C₁₃ alcohol starter was charged to the reactor simultaneously with ethylene oxide at 160°C. Ethylene oxide addition was continued after completion of the starter addition (non-CAOS). The residual ethylene oxide was digested and the product was stripped.

The foregoing examples of the present invention are offered for the purpose of illustration and not limitation. It will be apparent to those skilled in the art that the embodiments described herein may be modified or revised in various ways without departing from the spirit and scope of the invention. The scope of the invention is to be measured by the appended claims.

## Claims

1. A continuous process for the preparation of a polyoxyalkylene polyether product of number average molecular weight N, comprising:
a) establishing in a continuous reactor a first portion of a catalyst/initial starter mixture effective to initiate polyoxyalkylation of the initial starter after introduction of alkylene oxide into the continuous reactor;
b) continuously introducing into the continuous reactor one or more alkylene oxides;
c) continuously introducing into the continuous reactor one or more continuously added starters which may be the same or different than the initial starter;
d) continuously introducing into the reactor fresh catalyst and/or further catalyst/further starter mixture such that the catalytic activity is maintained, wherein the catalyst is selected from the group consisting of modified oxides and hydroxides of calcium, strontium and barium, lanthanum phosphates or lanthanide series (rare earth) phosphates and hydrotalcites and synthetic hydrotalcites;
e) polyoxyalkylating combined starters by continuously practicing at least steps b) through d) herein until a polyoxyalkylene polyether product of number average molecular weight N is obtained; and
f) continuously removing the polyoxyalkylene polyether product from the continuous reactor.

2. The process according to Claim 1, wherein the initial starter has an equivalent weight of from about 32 Da to about 4,000 Da.

3. The process according to Claim 1, wherein the initial starter is selected from the group consisting of propylene glycol, dipropylene glycol, glycerine dodecanol, tridecanol, tetradecanol, pentadecanol, 2-ethyl-1-hexanol, 2-propyl-1-heptanol, nonylphenol and dodecylphenol.

4. The process according to Claim 1, wherein the continuously added starter has a molecular weight of between about 18 Da and about 45,000 Da.

5. The process according to Claim 1, wherein the continuously added starter is selected from the group consisting of water, ethylene glycol, diethylene glycol, triethylene glycol, propylene glycol, dipropylene glycol, tripropylene glycol, 1,2-, 1,3-, and 1,4-butylene glycols, neopentyl glycol, glycerine, trimethylolpropane, triethylolpropane, pentaerythritol, α-methylglucoside, hydroxy-methyl-, hydroxyethyl-, and hydroxypropylglucosides, sorbitol, mannitol, sucrose, tetrakis [2-hydroxyethyland 2-hydroxypropyl]ethylene diamines, methanol, ethanol, 1-propanol, 2-propanol, n-butanol, 2-butanol, 2-ethylhexanol, phenol, catechol, 4,4'-dihydroxybiphenyl and 4,4'-dihydroxydiphenylmethane.

6. The process according to Claim 1, wherein the alkylene oxide is selected from the group consisting of ethylene oxide, propylene oxide, 1,2- and 2,3-butylene oxide, isobutylene oxide, epichlorohydrin, cyclohexene oxide, styrene oxide, and C₅₋₃₀ α-alkylene oxides.

7. A modified semibatch process for producing a polyether polyol comprising polymerizing an epoxide in the presence of:
(a) a catalyst selected from the group consisting of modified oxides and hydroxides of calcium, strontium and barium, lanthanum phosphates or lanthanide series (rare earth) phosphates and hydrotalcites and synthetic hydrotalcites;
(b) a continuously added starter (S_{c}); and
(c) optionally, an initially charged starter (Sᵢ);
wherein the S_{c} comprises at least about 2 eq. % of the total starter used; and
wherein the epoxide and the S_{c} are continuously added to the reactor during the polymerization.

8. The process according to Claim 7, wherein the initially charged starter (Sᵢ) has an equivalent weight of from about 32 Da to about 4,000 Da.

9. The process according to Claim 7, wherein the initial starter is selected from the group consisting of propylene glycol, dipropylene glycol, glycerine dodecanol, tridecanol, tetradecanol, pentadecanol, 2-ethyl-1-hexanol, 2-propyl-1-heptanol, nonylphenol and dodecylphenol.

10. The process according to Claim 7, wherein the continuously added starter (S_{c}) has a molecular weight of between about 18 Da and about 45,000 Da.

11. The process according to Claim 7, wherein the continuously added starter (S_{c}) is selected from the group consisting of water, ethylene glycol, diethylene glycol, triethylene glycol, propylene glycol, dipropylene glycol, tripropylene glycol, 1,2-, 1,3-, and 1,4-butylene glycols, neopentyl glycol, glycerine, trimethylolpropane, triethylolpropane, pentaerythritol, α-methylglucoside, hydroxy-methyl-, hydroxyethyl-, and hydroxypropylglucosides, sorbitol, mannitol, sucrose, tetrakis [2-hydroxyethyland 2-hydroxypropyl]ethylene diamines, methanol, ethanol, 1-propanol, 2-propanol, n-butanol, 2-butanol, 2-ethylhexanol, phenol, catechol, 4,4'-dihydroxybiphenyl and 4,4'-dihydroxydiphenylmethane.

12. The process according to Claim 7, wherein the alkylene oxide is selected from the group consisting of ethylene oxide, propylene oxide, 1,2- and 2,3-butylene oxide, isobutylene oxide, epichlorohydrin, cyclohexene oxide, styrene oxide, and C₅₋₃₀ α-alkylene oxides.

13. The process according to Claim 7, wherein the non-CAOS addition of alkylene oxide is greater than one weight percent of the total product.

14. The process according to Claim 7, wherein the heel for the starter is made *in situ.*

15. In a process for the production of surfactants, the improvement comprising including one or more polyoxyalkylene polyether products of number average molecular weight N produced by a continuous process comprising:
a) establishing in a continuous reactor a first portion of a catalyst/initial starter mixture effective to initiate polyoxyalkylation of the initial starter after introduction of alkylene oxide into the continuous reactor;
b) continuously introducing into the continuous reactor one or more alkylene oxides;
c) continuously introducing into the continuous reactor one or more continuously added starters which may be the same or different than the initial starter;
d) continuously introducing into the reactor fresh catalyst and/or further catalyst/further starter mixture such that the catalytic activity is maintained, wherein the catalyst is selected from the group consisting of modified oxides and hydroxides of calcium, strontium and barium, lanthanum phosphates or lanthanide series (rare earth) phosphates and hydrotalcites and synthetic hydrotalcites;
e) polyoxyalkylating combined starters by continuously practicing at least steps b) through d) herein until a polyoxyalkylene polyether product of number average molecular weight N is obtained; and
f) continuously removing the polyoxyalkylene polyether product from the continuous reactor.

16. In a process for the production of surfactants, the improvement comprising including one or more polyethers produced by a modified semibatch process comprising polymerizing an epoxide in the presence of:
(a) a catalyst selected from the group consisting of modified oxides and hydroxides of calcium, strontium and barium, lanthanum phosphates or lanthanide series (rare earth) phosphates and hydrotalcites and synthetic hydrotalcites;
(b) a continuously added starter (S_{c}); and
(c) optionally, an initially charged starter (Sᵢ);
wherein the S_{c} comprises at least about 2 eq. % of the total starter used; and
wherein the epoxide and the S_{c} are continuously added to the reactor during the polymerization.
